(19) Europäisches Patentamt
European Patent Office
Office européen des brevets

(11) EP 3 010 302 B1

(12) **EUROPEAN PATENT SPECIFICATION**

(45) Date of publication and mention of the grant of the patent:
**11.12.2019 Bulletin 2019/50**

(21) Application number: **14811142.0**

(22) Date of filing: **16.05.2014**

(51) Int Cl.:
***H04W 72/04*** *(2009.01)* *H04W 92/18* *(2009.01)*

(86) International application number:
**PCT/CN2014/077669**

(87) International publication number:
**WO 2014/198176 (18.12.2014 Gazette 2014/51)**

(54) **SUBFRAME CONFIGURATION INSTRUCTION METHOD AND SYSTEM IN D2D COMMUNICATION**

SUBFRAME-KONFIGURATIONSBEFEHLSVERFAHREN UND SYSTEM IN DER D2D-KOMMUNIKATION

PROCÉDÉ ET SYSTÈME D'INSTRUCTIONS DE CONFIGURATION DE SOUS-TRAMES POUR LA COMMUNICATION D2D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2013 CN 201310236354**

(43) Date of publication of application:
**20.04.2016 Bulletin 2016/16**

(73) Proprietor: **ZTE Corporation**
**Shenzhen, Guangdong 518057 (CN)**

(72) Inventors:
- **YANG, Jin**
  **Shenzhen**
  **Guangdong 518057 (CN)**
- **LIANG, Feng**
  **Shenzhen**
  **Guangdong 518057 (CN)**
- **WU, Shuanshuan**
  **Shenzhen**
  **Guangdong 518057 (CN)**
- **YUAN, Ming**
  **Shenzhen**
  **Guangdong 518057 (CN)**

(74) Representative: **Hervouet-Malbec, Sylvie et al**
**Ipsilon**
**Le Centralis**
**63, avenue du Général Leclerc**
**92340 Bourg-la-Reine (FR)**

(56) References cited:
**WO-A1-2011/051745** **WO-A1-2013/062310**
**WO-A1-2013/075581** **WO-A1-2013/075581**
**CN-A- 102 281 099** **CN-A- 102 307 060**
**US-A1- 2013 064 138**

- **ALCATEL-LUCENT ET AL: "LTE D2D Reference System Design and Evaluation Methodology", 3GPP DRAFT; R1-130953_D2D_EVALUATIONMETHODOLOGY _FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chicago, USA; 20130415 - 20130419 6 April 2013 (2013-04-06), XP050696951, Retrieved from the Internet: URL:http://www.3gpp.org/ftp/tsg_ran/WG1_RL 1/TSGR1_72b/Docs/ [retrieved on 2013-04-06]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present disclosure relates to the field of mobile communications, particularly to a method and a system for sub-frame configuration indication in Device-to-Device (D2D) communication.

### BACKGROUND

In a cellular system, when a service needs to be transmitted between two pieces of User Equipment (UE), service data from UE1 to UE2 is firstly transmitted through an air interface to base station 1 where UE1 locates. Base station 1 transmits the user data to base station 2 through a core network, and base station 2 further transmits the service data to UE2 through an air interface. Service data is transmitted from UE2 to UE1 by a similar processing flow. As shown in Fig. 1, a single data transmission still consumes two radio spectrum resources, though base station 1 and base station 2 are the same stations when UE1 and UE2 locate in the same cellular cell.

Thus it can be seen that the cellular communication method above is obviously not an optimal communication method if UE1 and UE2 are close to each other in the same cell while demands for service transmission between users close to each other are actually increasing with the diversification of mobile communication services, such as social networks and electronic payments and so on applied more and more widely in radio communication systems. Therefore, more and more attentions are being paid to a D2D communication mode. As shown in Fig. 2, the so-called D2D communication refers to that service data is transmitted by a source UE to a target UE directly through an air interface instead of being forwarded by a base station. Such a communication mode has features that are evidently different from those of a communication mode of a traditional cellular system. D2D transmission not only saves radio spectrum resources, but also reduces the data transmission pressure of a core network for a user of short range communication. D2D communication based on a cellular network, which is a novel technique for performing communication directly among a plurality of D2D function-supported terminal devices under the control of a system, is able to reduce occupation of system resources, improve the spectral efficiency of a cellular communication system, reduce power consumption of transmission of a terminal, and save network operation cost to a large extent.

A UE supporting the D2D communication mode may be in a cellular communication state and a D2D communication state simultaneously. In other words, the UE also keeps a D2D connection with another UE and transmits data when performing cellular communication with a base station. Two UEs performing D2D communication are called a D2D UE pair, and each UE is a D2D UE corresponding to the other UE. It is necessary to divide different resources between a cellular communication mode and a D2D communication mode for a UE. From the perspective of time domain division, dedicated sub-frames are divided for D2D communication and the problem to be solved at present is how to implement configuration indication for a D2D communication sub-frame conveniently and effectively.

CN 102281099A relates to a method, system and apparatus for transmitting data in a TDD radio frame.

WO 2013/075581 A1 relates to a D2D method, D2D terminal and base station.

WO 2013/062310 A1 relates to a method for allowing base station to support device-to-device (D2D) communication in wireless communication system, and method for allowing D2D device to efficiently transmit D2D communications request signal.

WO 2011/051745 A1 relates to scheduling of direct to direct communication.

US 2013/0064138 A1 relates to mechanism for controlling device-to-device discovery procedure.

ALCALEL-LUCENT ET AL. "LTE D2D reference system design and evaluation methodology", 3GPP DRAFT, R1-130953_D2D_EVALUTIONMETHODOLOGY_FINAL, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, VOL. RAN WG1, no. Chicago, USA, relates to LTE D2D reference system design and evaluation methodology.

### SUMMARY

Embodiments of the present disclosure provide a method and a system for indicating sub-frame configuration in D2D communication so as to solve the existing technical problem.

In order to achieve the purpose, the technical solutions of the embodiments of the disclosure are as stated in claims 1 and 7.

According to a method and a system for indicating sub-frame configuration in D2D communication provided by the embodiments of the present disclosure, D2D sub-frame resources may be configured flexibly and effectively by effectively dividing D2D communication resources, so that a D2D UE transmits D2D data on a configured D2D sub-frame, thereby improving the utilization ratio of resources, satisfying demands of data communication of a UE, coordinating and controlling interference and so on and thus implementing efficient data transmission.

## BRIEF DESCRIPTION OF THE DRAWINGS

Fig. 1 is a schematic diagram of a data communication method of a cellular network in existing technology;
Fig. 2 is a schematic diagram of a D2D communication method;
Fig. 3 is a structural diagram of a frame of a Long Term Evolution (LTE) system in the existing technology;
Fig. 4 is a flowchart of notifying configuration of a D2D sub-frame, a D2D transmitting sub-frame, a D2D receiving sub-frame or a D2D special sub-frame by high layer signalling in an embodiment of the present disclosure;
Fig. 5 is a schematic diagram of D2D receiving sub-frame configuration acquired according to a first method in an embodiment of the present disclosure;
Fig. 6 is a flowchart of notifying configuration of a D2D sub-frame, a D2D transmitting sub-frame, a D2D receiving sub-frame or a D2D special sub-frame by high layer signalling in an embodiment of the present disclosure;
Fig. 7 is a schematic diagram of D2D transmitting sub-frame and receiving sub-frame configuration acquired according to a second method in an embodiment of the present disclosure;
Fig. 8 is a schematic diagram of D2D sub-frame configuration acquired according to the second method in an embodiment of the present disclosure;
Fig. 9 is a schematic diagram of D2D receiving sub-frame configuration acquired according to the second method in an embodiment of the present disclosure;
Fig. 10 is a schematic diagram of D2D transmitting sub-frame configuration acquired according to the first method in an embodiment of the present disclosure;
Fig. 11 is a schematic diagram of D2D sub-frame configuration acquired according to the first method in an embodiment of the present disclosure;
Fig. 12 is a schematic diagram of D2D transmitting sub-frame and receiving sub-frame configuration acquired according to the second method in an embodiment of the present disclosure;
Fig. 13 is a schematic diagram of D2D sub-frame configuration acquired according to the second method in an embodiment of the present disclosure; and
Fig. 14 is a schematic diagram of D2D transmitting sub-frame configuration acquired according to the first method in an embodiment of the present disclosure.

## DETAILED DESCRIPTION

The technical solutions of the present disclosure will be further expounded hereinafter with reference to the accompanying drawings and specific embodiments.

Embodiments not falling within the scope of the appended claims are described merely as illustrative examples. A method for indicating sub-frame configuration in D2D communication according to an embodiment of the present disclosure mainly includes that: a configured D2D sub-frame is indicated through high layer signalling and/or physical layer signalling, or a configured D2D transmitting sub-frame and/or D2D receiving sub-frame and/or D2D special sub-frame are/is indicated through high layer signalling and/or physical layer signalling, wherein the D2D transmitting sub-frame is configured to carry and transmit D2D communication data, the D2D receiving sub-frame is configured to receive D2D communication data and the D2D special sub-frame is configured to carry, transmit and receive D2D communication data, and the D2D transmitting sub-frame, the D2D receiving sub-frame and the D2D special sub-frame are system uplink sub-frames.

The configured D2D transmitting sub-frame and/or D2D receiving sub-frame and/or D2D special sub-frame are indicated through signalling twice, wherein first signalling indicates that the configured D2D sub-frame is indicated by high layer signalling, and the configured D2D sub-frame includes a D2D transmitting sub-frame and/or a D2D receiving sub-frame and/or a D2D special sub-frame; and second signalling indicates that the transmitting sub-frame and/or receiving sub-frame and/or special sub-frame of D2D communication are/is indicated in the configured D2D sub-frame through high layer signalling or physical layer signalling. It is not needed to distinguish whether the D2D sub-frame configured by the first signalling is a transmitting sub-frame, or a receiving sub-frame or a special sub-frame, and it only means that the indicated sub-frame may be for carrying and transmitting D2D data. In the indication of the second signalling, specific sub-frames serving as D2D transmitting sub-frames, and/or D2D receiving sub-frames, and/or special sub-frames in the D2D sub-frames configured by the first signalling are indicated to a D2D UE by the high layer signalling or the physical layer signalling,
wherein the D2D sub-frame configured by the high layer signalling serving as the first signalling includes at least one of the following:
a public D2D sub-frame of a cell, a public D2D sub-frame of a D2D communication group, a D2D sub-frame of a D2D UE pair, and a D2D sub-frame of a D2D UE.

Preferably, the D2D transmitting sub-frame and/or D2D receiving sub-frame and/or D2D special sub-frame may be also indicated by signalling only once, wherein the one signalling is high layer signalling or physical layer signalling.

The high layer signalling in the embodiment of the present disclosure includes at least one of the following: a D2D connection setup request message, D2D connection setup response message, a D2D connection reconfiguration message, an SIB and a D2D broadcast message.

Preferably, the high layer signalling includes at least one of the following parameters: the pattern of D2D sub-frame configuration (D2D-SubframeConfigPattern), the period of D2D sub-frame configuration (D2D-radioframeAllocationPeriod), the offset of D2D sub-frame configuration (D2D-radioframeAllocationOffset), and the indication of D2D sub-frame configuration (D2D-SubframeAllocation).

The physical layer signalling in the embodiment of the present disclosure includes DCI or a dedicated D2D communication control message.

Preferably, the physical layer signalling includes the following parameters: D2D-SubframeConfigPattern or D2D-SubframeAllocation.

The method includes that when the configured D2D sub-frame, D2D transmitting sub-frame, D2D receiving sub-frame or D2D special sub-frame is indicated through the D2D-SubframeConfigPattern which is 8bit indication information, a system uplink sub-frame satisfying the following relation is indicated as a D2D sub-frame: $[(10\text{-}n_f + \lfloor n_S/2 \rfloor)\mathrm{mod}8] \in \Delta_{BSC}$ , where $n_f$ represents a system frame number, $n_S$ represents a time slot number of a radio frame, $10\text{-}n_f + \lfloor n_S/2 \rfloor$ represents that sub-frames are numbered consecutively by the system frame number $n_f$ and the time slot number $n_S$; the consecutive sub-frame numbers mod 8 represents that the sub-frames are divided into 8 groups in turn, $\Delta_{BSC}$ corresponds to a group number, and $\Delta_{BSC}$ is in a preset corresponding relationship with the D2D-SubframeConfigPattern.

When the configured D2D sub-frame, D2D transmitting sub-frame, D2D receiving sub-frame or D2D special sub-frame is indicated through the D2D-radioframeAllocationPeriod, the D2D-radioframeAllocationOffset and the D2D-SubframeAllocation, the method includes that:

a radio frame where the configured D2D sub-frame, D2D transmitting sub-frame, D2D receiving sub-frame or D2D special sub-frame locates is indicated through the D2D-radioframeAllocationPeriod and the D2D-radioframeAllocationOffset, that is, the radio frame where the configured D2D sub-frame, D2D transmitting sub-frame, D2D receiving sub-frame or D2D special sub-frame locates is a radio frame satisfying a following relation: a radio frame number mod the D2D-radioframeAllocationPeriod is equal to the D2D-radioframeAllocationOffset;

the configured D2D sub-frame, D2D transmitting sub-frame, D2D receiving sub-frame or D2D special sub-frame is indicated through the D2D-SubframeAllocation in combination with the radio frame where the D2D sub-frame, the D2D transmitting sub-frame, the D2D receiving sub-frame or the D2D special sub-frame locates, wherein the D2D-SubframeAllocation is 10bit or 40bit indication information which is respectively in one-to-one correspondence with sub-frames in the radio frame where the D2D sub-frame, the D2D transmitting sub-frame, the D2D receiving sub-frame or the D2D special sub-frame locates, that is, the D2D sub-frame, the D2D transmitting sub-frame, the D2D receiving sub-frame or the D2D special sub-frame configured in the radio frame where the D2D sub-frame, the D2D transmitting sub-frame, the D2D receiving sub-frame or the D2D special sub-frame locates is indicated by means of a bitmap.

Preferably, values of the D2D-radioframeAllocationPeriod are [1,2,4,8,16,32] and values of the D2D-radioframeAllocationOffset are [0,1,2,3,4,5,6,7].

The high layer signalling and/or the physical layer signalling in the embodiment of the present disclosure are/is sent by a network side entity to a D2D UE, or are/is sent by a D2D communication terminal corresponding to a first D2D UE, which is a second D2D UE, to the first D2D UE.

The network side entity may include at least one of the following: an evolved NodeB (eNB), a Multi-cell/multicast Coordination Entity (MCE), a Gateway (GW), a Mobility Management Entity (MME), an Evolved Universal Terrestrial Radio Access Network (EUTRAN) entity and an Operation Administration and Maintenance (OAM) manager.

Description will be provided in the following embodiments of the present disclosure by taking an eNB functioning as a configuration control entity of a network side as an example, and other entities are deduced by analogy.

In D2D communication, two or more UEs are controlled and indicated by an eNB to transmit data directly to each other, and illustration will be provided by taking a D2D pair consisting of two UEs as an example in the following example so as to facilitate description.

Each radio frame in an LTE system is 10ms and includes 10 sub-frames. A sub-frame is 1ms, consisting of 2 time slots of 0.5ms. As shown in Fig. 3, a system frame number is denoted by $n_f$, 20 time slots in each radio frame are numbered consecutively, denoted by $n_S$, and the value range is [0,19].

Configuration of a D2D sub-frame may be indicated by an eNB to a D2D UE, or indicated by a D2D UE corresponding to a first D2D UE, i.e. a second D2D UE, to the first D2D UE by high layer signalling and/or physical layer signalling.

Preferably, the configuration of a D2D sub-frame is indicated by two methods specifically. The first method is that a configured D2D sub-frame is indicated to a D2D UE by two signalling configurations, or configured D2D transmitting sub-frame and/or receiving sub-frame and/or special sub-frame are/is indicated to a D2D UE by two signalling configurations, and the second method is that, according to an illustrative example not falling within the scope of the invention defined by the claims, a configured D2D sub-frame is indicated to a D2D UE by a single signalling configuration, or configured D2D transmitting sub-frame and/or receiving sub-frame and/or special sub-frame are/is indicated to a D2D UE by a single signalling configuration, wherein a D2D transmitting sub-frame is configured to carry and transmit D2D communication data, a D2D receiving sub-frame is configured to receive D2D communication data and a D2D special sub-frame is configured to carry, transmit and receive D2D communication data.

Specifically, in the two signalling configurations of the first method, a first signalling configuration indicates a configured D2D sub-frame to the D2D UE through a high layer signalling configuration indication. Here, the configured D2D sub-frame is not distinguished as a transmitting, receiving or special sub-frame, and it only means that the indicated sub-frame may be for carrying and transmitting D2D data. Further, specific sub-frames serving as D2D transmitting sub-frames, and/or D2D receiving sub-frames, and/or special sub-frames in a D2D sub-frame configured by first signalling are indicated to the D2D UE by the high layer signalling or the physical layer signalling in a second signalling indication, and it is specified by second signalling that the configured D2D transmitting sub-frame(s), and/or receiving sub-frame and/or special sub-frame are/is a subset of a set of D2D sub-frame(s) configured by the first signalling.

Extremely flexible and efficient D2D resource configuration may be implemented through the indications of the two signalling configurations of the first method, and the two signalling configurations may be controlled by different nodes. For example, the first signalling and the second signalling are both configured and indicated by an eNB, or the first signalling is indicated by an eNB while the second signalling is configured and indicated by a D2D UE corresponding to of a first D2D UE, i.e., a second D2D UE, to the first D2D UE.

The two signalling configurations in the first method may include various combination forms, specifically including that:

the first signalling configures a public D2D sub-frame of a cell, and the second signalling configures a D2D transmitting sub-frame and/or a D2D receiving sub-frame and/or a D2D special sub-frame to which a D2D UE belongs; or

the first signalling configures a public D2D sub-frame of a cell, and the second signalling configures a D2D transmitting sub-frame and/or a D2D receiving sub-frame and/or a D2D special sub-frame of a D2D UE pair; or

the first signalling configures a public D2D sub-frame of a D2D UE group, and the second signalling configures a D2D transmitting sub-frame and/or a D2D receiving sub-frame and/or a D2D special sub-frame to which a D2D UE belongs; or

the first signalling configures a D2D sub-frame of a D2D UE pair, and the second signalling configures a D2D transmitting sub-frame and/or a D2D receiving sub-frame and/or a D2D special sub-frame to which a D2D UE belongs.

In the second method, an eNB or a second D2D UE indicates a D2D sub-frame, a D2D transmitting sub-frame and/or a D2D receiving sub-frame and/or a D2D special sub-frame by a single signalling configuration, and the adopted configuration signalling is high layer signalling or physical layer signalling. The a D2D sub-frame, D2D transmitting sub-frame and/or D2D receiving sub-frame and/or D2D special sub-frame configured by the D2D UE are/is configured and indicated directly.

Those indicated by no matter the first method or the second method as a D2D sub-frame, a D2D transmitting sub-frame, a D2D receiving sub-frame and a D2D special sub-frame are all system uplink sub-frames for carrying D2D communication data including service data and/or control data of D2D communication. A D2D UE may carry D2D data on a D2D sub-frame, a D2D transmitting sub-frame, a D2D receiving sub-frame and a D2D special sub-frame to perform exchange D2D data with a corresponding D2D UE.

When configuration of a D2D sub-frame, or a D2D transmitting sub-frame/D2D receiving sub-frame/D2D special sub-frame is indicated through high layer signalling in the first method or the second method, the required parameters may be carried by the following high layer signalling: a D2D connection setup request message, a D2D connection setup response message, a D2D connection reconfiguration message, an SIB and a D2D broadcast message. The high layer signalling may be interacted between an eNB and a D2D UE, or between a first D2D UE and a second D2D UE. Besides, parameters which are carried in the high layer signalling and configured to indicate configuration of the D2D sub-frame, or the D2D transmitting sub-frame/D2D receiving sub-frame/D2D special sub-frame include one or more of the following:

D2D-SubframeConfigPattern, D2D-radioframeAllocationPeriod, D2D-radioframeAllocationOffset and D2D-SubframeAllocation.

When the configuration of the D2D sub-frame, or the D2D transmitting sub-frame/D2D receiving sub-frame/D2D special sub-frame is indicated by physical layer signalling, the required parameters may be carried by DCI or a dedicated D2D general control information, and the D2D-SubframeConfigPattern or the D2D-SubframeAllocation is indicated by a fixed number of bits in the DCI or the dedicated D2D control information. The physical layer signalling may be indicated to the D2D UE by the eNB, or indicated to a first D2D UE by the second D2D UE.

Specifically, there are two schemes for configuring and indicating a D2D sub-frame based on the parameters above.

In the first scheme, a configured D2D sub-frame, or a D2D transmitting sub-frame/D2D receiving sub-frame/D2D special sub-frame is indicated by the D2D-SubframeConfigPattern.

System uplink sub-frames are numbered consecutively according to system frame numbers and sub-frame numbers, and divided into 8 groups in turn. Any one or more groups in the 8 groups of sub-frames are/is configured as D2D sub-frame(s), or D2D transmitting sub-frames/D2D receiving sub-frames/D2D special sub-frames as required by a D2D UE. The configuration mode above is represented by the following formula:

$$\left[\left(10 \cdot n_f + \lfloor n_s/2 \rfloor\right) \bmod 8\right] \in \Delta_{BSC}$$

where $10 \cdot n_f + \lfloor n_S/2 \rfloor$ represents that the sub-frames are numbered consecutively by the system frame numbers $n_f$ and time slot numbers $n_S$, the consecutive sub-frame numbers mod 8 represents that the sub-frames are divided into 8 groups in turn and $\Delta_{BSC}$ corresponds to a group number.

In this scheme, the D2D-SubframeConfigPattern is 8bit information, and is in a predefined corresponding relationship with $\Delta_{BSC}$. One of the corresponding modes is as shown in the following Table 1: {xxxxxxx1} represents that the last bit in 8bit information bits of the D2D-SubframeConfigPattern is "1", corresponding to $\Delta_{BSC}$=7 in the corresponding relationships as shown in Table 1. Other situations are deduced by analogy. Table 1 shows an example of corresponding relationships between the D2D-SubframeConfigPattern and $\Delta_{BSC}$, but the embodiments of the present disclosure are not limited thereby, and any correspondence table having the same principle is available.

Table 1

| D2D-SubframeConfigPattern | Offset value element of $\Delta_{BSC}$ |
|---|---|
| {xxxxxxx1} | 7 |
| {xxxxxx1x} | 6 |
| {xxxxx1xx} | 5 |
| {xxxx1xxx} | 4 |
| {xxx1xxxx} | 3 |
| {xx1xxxxx} | 2 |
| {x1xxxxxx} | 1 |
| {1xxxxxxx} | 0 |

In the second scheme, configuration of a D2D sub-frame, or a D2D transmitting sub-frame/D2D receiving sub-frame/D2D special sub-frame is indicated by the D2D-radioframeAllocationPeriod, the D2D-radioframeAllocationOffset and the D2D-SubframeAllocation.

The configuration of the D2D sub-frame may be further indicated by two steps in this scheme.

Step 1 is that a radio frame where the configured D2D sub-frame or D2D transmitting sub-frame/D2D receiving sub-frame/D2D special sub-frame locates is indicated.

The radio frame where the configured D2D sub-frame or D2D transmitting sub-frame/D2D receiving sub-frame/D2D special sub-frame locates is indicated jointly by two parameters, i.e. the D2D-radioframeAllocationPeriod and the D2D-radioframeAllocationOffset.

The result of the system uplink system frame numbers mod D2D-radioframeAllocationPeriod is equal to the D2D-radioframeAllocationOffset of the radio frame where the configured D2D sub-frame or D2D transmitting sub-frame/D2D receiving sub-frame/D2D special sub-frame locates.

Step 2 is that the configured D2D sub-frame or D2D transmitting sub-frame/D2D receiving sub-frame/D2D special sub-frame is further indicated in the radio frame.

By step 1, a D2D UE may acquire 1 to 4 indicated radio frames, and further indicates sub-frames in the radio frames one by one according to D2D-SubframeAllocation by means of a bitmap. For example, when a corresponding indicator bit in the bitmap is "1", it is indicated that the sub-frame is a D2D sub-frame, or a D2D transmitting sub-frame/D2D receiving sub-frame/D2D special sub-frame. Configuration indication of a D2D sub-frame includes 10bit or 40bit information, corresponding to the case that the number of indicated radio frames is 1 or 4, respectively.

Embodiment 1

A D2D transmitting/receiving sub-frame is configured by the second method, a specific configuration mode applies the first scheme, and an indication is performed based on 8 bit D2D-SubframeConfigPattern.

Controlled and indicated by an eNB, D2D UE A and D2D UE B perform a D2D connection setup process. As shown in Fig. 4, UE A sends a D2D connection setup request message to UE B (or sends to UE B via the eNB). After receiving the D2D connection setup request message, the UE B sends to the UE A a D2D connection setup response message including configuration indication information, i.e. 8bit D2D-SubframeConfigPattern, for a D2D receiving sub-frame allocation. After connection setup is completed, the UE A sends a D2D connection setup complete message to the UE B.

After receiving the D2D connection setup response message, the UE A acquires information of the D2D-SubframeConfigPattern from the D2D connection setup response message. The 8bit information is [1000 0000]. Taking the corresponding relationships as shown in Table 1 for example, then $\Delta_{BSC}$=0 according to the first scheme, and D2D receiving sub-frames acquired by the UE A are a group of sub-frames satisfying [$(10-n_f+\lfloor n_S/2 \rfloor) \bmod 8$]= 0, as shown by the shaded parts in Fig. 5. The UE A receives, according to the configuration, D2D data from the UE B on a configured D2D receiving sub-frame.

Embodiment 2

A D2D transmitting/receiving sub-frame is configured by the second method, a specific configuration mode applies the second scheme, and indication is performed based on D2D-radioframeAllocationPeriod, D2D-radioframeAllocationOffset and a 10bit D2D-SubframeAllocation parameter.

D2D UE A and D2D UE B are controlled and indicated by an eNB to set up a D2D communication connection. The configuration indication that the eNB performs D2D communication with UE A and UE B respectively is sent to the two UEs via a D2D connection reconfiguration message. As shown in Fig. 6, the eNB indicates related parameters including D2D-radioframeAllocationPeriod, D2D-radioframeAllocationOffset and D2D-SubframeAllocation of configuration of a D2D transmitting sub-frame and a D2D receiving sub-frame via the D2D connection reconfiguration message to UE A and UE B, wherein the D2D-radioframeAllocationPeriod is 2, the D2D-radioframeAllocationOffset is 0 and 10 bit D2D-SubframeAllocation is applied. The information bits of 10bit D2D-SubframeAllocation of a D2D transmitting sub-frame for UE A are [10000 00100] and a corresponding indicator bit "1" represents that a corresponding sub-frame is a D2D transmitting sub-frame, while information bits of 10bit D2D-SubframeAllocation of a D2D receiving sub-frame are [01001 00000] and a corresponding indicator bit "1" represents that a corresponding sub-frame is a D2D receiving sub-frame. The information bits of 10bit D2D-SubframeAllocation of a D2D transmitting sub-frame for UE B are [01001 00000], and a corresponding indicator bit "1" represents that a corresponding sub-frame is a D2D transmitting sub-frame, while information bits of 10bit D2D-SubframeAllocation of a D2D receiving sub-frame are [10000 00100], and a corresponding indicator bit "1" represents that a corresponding sub-frame is a D2D receiving sub-frame.

Configuration of D2D transmitting sub-frames and D2D receiving sub-frames of UE A and UE B under the configuration indication above according to the second method is as shown by the shaded parts in Fig. 7.

Embodiment 3

A D2D transmitting/receiving/special sub-frame is configured by the first method, wherein the second scheme is applied in a first signalling configuration, and indication is performed through D2D-radioframeAllocationPeriod, D2D-radioframeAllocationOffset and a 40bit D2D-SubframeAllocation parameter while a 10bit sub-frame configuration indication parameter is indicated by physical layer signalling for indication in a second signalling configuration.

An eNB indicates related parameters including D2D-radioframeAllocationPeriod, D2D-radioframeAllocationOffset and D2D-SubframeAllocation of configuration of a D2D sub-frame to UE A through D2D Connection Reconfiguration, wherein the D2D-radioframeAllocationPeriod is 8, the D2D-radioframeAllocationOffset is 0 and 40 bit D2D-SubframeAllocation is applied.

In this configuration, the radio frames where the indicated D2D sub-frames are located are radio frames #n, #n+1, #n+2, #n+3, #n+8, #n+9, #n+10, #n+11,......, information bits of the 40 bit D2D-SubframeAllocation are [11000 00011 10000 00000 00011 00000 00010 00010], and a corresponding indicator bit "1" represents that a corresponding sub-frame is a D2D sub-frame, then configured D2D sub-frames are as shown by the shaded parts in Fig. 8.

UE A acquires basic D2D sub-frame configuration through configuration indication of first signalling, that is, the configured D2D sub-frames may be a set of available D2D transmitting and/receiving and/or special sub-frames.

Preferably, D2D communication UE B which is corresponding to UE A performs a second signalling configuration to UE A and indicates a 10bit D2D receiving sub-frame configuration indication parameter to UE A through DCI of a physical layer. The UE A, according to [10010 00000] included in the DCI , takes the sub-frames which are in the acquired set of D2D sub-frames and are overlapped with sub-frames indicated by the second signalling configuration as D2D receiving sub-frames, thereby ensuring that the adopted D2D receiving sub-frames belong to a subset of the set of D2D sub-frames. Combining the first and second signalling configurations, final D2D receiving sub-frames of UE A are shown by the shaded parts in Fig. 9.

Embodiment 4

A D2D transmitting/receiving sub-frame is configured by the second method, a specific configuration mode applies the first scheme, and indication is performed based on 8bit D2D-SubframeConfigPattern.

D2D UE A configures and indicates D2D transmitting sub-frames to a corresponding D2D UE B through physical layer signalling. UE A indicates, via a D2D-dedicated control channel, an 8bit D2D-SubframeConfigPattern parameter to UE B via dedicated D2D control information. UE B receives an indication information bit in the dedicated D2D control information and acquires D2D-SubframeConfigPattern which is [1000 1000]. Taking the corresponding relationships as shown in Table 1 for example, if $\Delta_{BSC}$=0,4 according to the first method, then D2D transmitting sub-frames acquired by UE B are two groups of sub-frames satisfying [$(10\text{-}n_f + \lfloor n_S/2 \rfloor)$mod8]= 0,4, as shown by the shaded parts in Fig. 10.

Embodiment 5

A D2D transmitting/receiving/special sub-frame is configured by applying the first method, wherein the first scheme is applied in a first signalling configuration, and indication is performed through 8bit D2D-SubframeConfigPattern while the second scheme is applied in a second signalling configuration and high layer signalling indicates D2D-radioframeAllocationPeriod, D2D-radioframeAllocationOffset and a 40bit sub-frame configuration indication parameter to perform indication.

A D2D UE in a cell receives a system broadcast message, wherein related parameters of D2D sub-frame configuration indicated by an eNB is included in an SIB 2, that is, the first signalling configuration is specifically 8bit D2D-SubframeConfigPattern.

After receiving the decoded SIB 2, D2D UE A acquires information of the D2D-SubframeConfigPattern therein, and the 8bit information is [1110 0000]. Taking the corresponding relationships in Table 1 for example, if $\Delta_{BSC}$=0,1,2 according to the first method, then D2D sub-frames of the cell are three groups of sub-frames satisfying [$(10\text{-}n_f + \lfloor n_S/2 \rfloor)$mod8]= 0,1,2 , as shown by the shaded parts in Fig. 11.

Preferably, the eNB indicates the related parameters of D2D sub-frame configuration to UE A through high layer signalling, including the D2D-radioframeAllocationPeriod, the D2D-radioframeAllocationOffset and D2D-SubframeAllocation, wherein the D2D-radioframeAllocationPeriod is 4, the D2D-radioframeAllocationOffset is 0 and 40bit D2D-SubframeAllocation is applied. A D2D transmitting sub-frame indication of UE A is [11000 00000 10000 00010 00000 00000 00010 00000], and a D2D receiving sub-frame indication is [00000 00010 00000 00000 00001 10000 00000 00000].

Then according to the configuration, as to a D2D sub-frame set configured by the first signalling, UE A takes sub-frames which are configured according to the second signalling indication of the eNB and are overlapped with the D2D sub-frame set as D2D transmitting/receiving sub-frames, and the D2D transmitting sub-frames and receiving sub-frames of UE A are shown by the shaded parts in Fig. 12.

Embodiment 6

A D2D transmitting/receiving sub-frame is configured by the first method, wherein the second scheme is applied in a first signalling configuration, and high layer signalling indicates D2D-radioframeAllocationPeriod, D2D-radioframeAllocationOffset and a 10bit sub-frame configuration indication parameter to perform indication while the first scheme is applied in a second signalling configuration, and indication is performed through physical layer signalling by a 8bit D2D-SubframeConfigPattern parameter.

D2D UEs A, B, C, D and E form a D2D communication group, wherein D2D UE A is a group administrator. UE A sends a dedicated D2D broadcast message to other D2D UEs in the group. The D2D broadcast message includes related parameters of D2D sub-frame configuration in the group, including D2D-radioframeAllocationPeriod, D2D-radioframeAllocationOffset and D2D-SubframeAllocation, wherein the D2D-radioframeAllocationPeriod is 1, the D2D-radioframeAllocationOffset is 0 and 10bit D2D-SubframeAllocation is applied. The 10bit information bit is [10001 00100], and a corresponding indicator bit is "1" which represents that a corresponding sub-frame is a D2D sub-frame.

Then according to the second scheme, available D2D sub-frame configuration in the D2D communication group under the configuration indication above is shown by the shaded parts in Fig. 13, and sub-frame#0, sub-frame#4 and sub-frame#7 of each radio frame are D2D sub-frames in the group.

Preferably, D2D UE A configures and indicates a D2D transmitting sub-frame to corresponding D2D UE E through physical layer signalling. UE A indicates an 8bit D2D-SubframeConfigPattern parameter to UE E through dedicated D2D control information in a D2D dedicated control channel. UE E receives an indication information bit in the dedicated D2D control information, and acquires D2D-SubframeConfigPattern which is [1100 0000]. Then according to the configuration, sub-frames which are configured in the second signalling indication and are overlapped with a D2D sub-frame set acquired in the first signalling configuration are taken as D2D transmitting sub-frames of UE E. Taking the corresponding relationships as shown in Table 1 for example, if $\Delta_{BSC}$=0,1 according to the first scheme, then D2D transmitting sub-frames acquired by UE E are sub-frames satisfying $[(10\text{-}n_f + \lfloor n_S/2 \rfloor)\text{mod}8] = 0,1$, as shown by the shaded parts in Fig. 14.

Corresponding to a method for indicating sub-frame configuration in D2D communication of the embodiments of the present disclosure, an embodiment of the present disclosure further provides a system for indicating sub-frame configuration in D2D communication, including a sub-frame configuration module and an indication module, which are connected with each other,

wherein the sub-frame configuration module is configured to configure a D2D sub-frame or configure a D2D transmitting sub-frame and/or D2D receiving sub-frame and/or D2D special sub-frame, wherein the D2D transmitting sub-frame is configured to carry and transmit D2D communication data, the D2D receiving sub-frame is configured to receive D2D communication data and the D2D special sub-frame is configured to carry, transmit and receive D2D communication data, and the D2D transmitting sub-frame, receiving sub-frame and special sub-frame are system uplink sub-frames; and the indication module is configured to indicate the configured D2D sub-frame or indicate the configured D2D transmitting sub-frame and/or D2D receiving sub-frame and/or D2D special sub-frame through high layer signalling and/or physical layer signalling.

Preferably, the indication module is configured to indicate the configured D2D transmitting sub-frame and/or D2D receiving sub-frame and/or D2D special sub-frame through signalling twice,

wherein first signalling indicates that the configured D2D sub-frame is indicated by high layer signalling, and the sub-frame includes the D2D transmitting sub-frame and/or D2D receiving sub-frame and/or D2D special sub-frame; second signalling indicates that the transmitting sub-frame and/or receiving sub-frame and/or special sub-frame of D2D communication are/is indicated in the configured D2D sub-frame through high layer signalling or physical layer signalling.

The D2D sub-frame configured by the high layer signalling serving as a first signalling includes at least one of the following:

a public D2D sub-frame of a cell, a public D2D sub-frame of a D2D communication group, a D2D sub-frame of a D2D UE pair, and a D2D sub-frame of a D2D UE.

Preferably, the indication module is configured to indicate the configured D2D transmitting sub-frame and/or D2D receiving sub-frame and/or D2D special sub-frame by signalling only once, wherein the one signalling is high layer signalling or physical layer signalling.

The high layer signalling includes at least one of the following:

a D2D connection setup request message, a D2D connection setup response message, a D2D connection reconfiguration message, an SIB and a D2D broadcast message. The high layer signalling includes at least one of the following parameters:

D2D-SubframeConfigPattern,D2D-radioframeAllocationPeriod, D2D-radioframeAllocationOffset and D2D-SubframeAllocation.

The physical layer signalling includes DCI or a dedicated D2D communication control message. The physical layer signalling includes the following parameters: D2D-SubframeConfigPattern or D2D-SubframeAllocation.

Preferably, when the indication module indicates the configured D2D sub-frame, D2D transmitting sub-frame, D2D receiving sub-frame or D2D special sub-frame through the D2D-SubframeConfigPattern which is 8bit indication information, a system uplink sub-frame satisfying the following relation is indicated as a D2D sub-frame: $[(10\text{-}n_f + \lfloor n_S/2 \rfloor)\text{mod}8] \in \Delta_{BSC}$, where $n_f$ represents a system frame number, $n_S$ represents a time slot number of a radio frame, $10\text{-}n_f + \lfloor n_S/2 \rfloor$ represents that sub-frames are numbered consecutively by the system frame number $n_f$ and the time slot number $n_S$; the consecutive sub-frame numbers mod 8 represents that the sub-frames are divided into 8 groups in turn, $\Delta_{BSC}$ corresponds to a group number, and $\Delta_{BSC}$ is in a preset corresponding relationship with the D2D-SubframeConfigPattern.

That the indication module indicates the configured D2D sub-frame, D2D transmitting sub-frame, D2D receiving sub-frame or D2D special sub-frame through the D2D-radioframeAllocationPeriod, the D2D-radioframeAllocationOffset and the D2D-SubframeAllocation includes that:

a radio frame where the configured D2D sub-frame, D2D transmitting sub-frame, D2D receiving sub-frame or D2D special sub-frame locates is indicated through the D2D-radioframeAllocationPeriod and the D2D-radioframeAllocationOffset, that is, the radio frame where the configured D2D sub-frame, D2D transmitting sub-frame, D2D receiving sub-frame or D2D special sub-frame locates is a radio frame satisfying a following relation: a radio frame number mod the D2D-radioframeAllocationPeriod is equal to the D2D-radioframeAllocationOffset;

the configured D2D sub-frame, D2D transmitting sub-frame, D2D receiving sub-frame or D2D special sub-frame is indicated through the D2D-SubframeAllocation in combination with the radio frame where the D2D sub-frame, the D2D transmitting sub-frame, the D2D receiving sub-frame or the D2D special sub-frame locates, wherein the D2D-SubframeAllocation is 10bit or 40bit indication information which is respectively in one-to-one correspondence with sub-frames in the radio frame where the D2D sub-frame, the D2D transmitting sub-frame, the D2D receiving sub-frame or the D2D special sub-frame locates, that is, the D2D sub-frame, the D2D transmitting sub-frame, the D2D receiving sub-frame or the D2D special sub-frame configured in the radio frame where the D2D sub-frame, the D2D transmitting sub-frame, the D2D receiving sub-frame or the D2D special sub-frame locates is indicated by means of a bitmap.

Preferably, values of the D2D-radioframeAllocationPeriod are [1,2,4,8,16,32] and values of the D2D-radioframeAllocationOffset are [0,1,2,3,4,5,6,7].

Preferably, the system locates in a network side entity and the high layer signalling and/or the physical layer signalling are/is sent by the indication module in the network side entity to a D2D UE; or the system locates in a D2D communication terminal corresponding to a first D2D UE, which is a second D2D UE, and the high layer signalling and/or the physical layer signalling are/is sent by the indication module in the second D2D UE to the first D2D UE.

Preferably, the network side entity includes at least one of the following: an eNB, an MCE, a GW, an MME, an EUTRAN entity and an OAM manager.

It needs to be noted that the sub-frame configuration module may be implemented by a Central Processing Unit (CPU), a Micro Processing Unit (MPU) or a Field-Programmable Gate Array (FPGA) in the network side entity and the indication module may be implemented by a communication chip of the network side entity.

To sum up, D2D sub-frame resources may be configured flexibly and effectively by effectively dividing D2D communication resources in the embodiments of the present disclosure, so that a D2D UE transmits D2D data on a configured D2D sub-frame, thereby improving the utilization ratio of resources, satisfying demands of data communication of a UE, coordinating and controlling interference and so on and thus implementing efficient data transmission.

## Claims

**1.** A method for indicating sub-frame configuration in Device-to-Device, D2D, communication, comprising:

indicating, by a network side entity or a second D2D UE corresponding to the first D2D UE, a configured D2D sub-frame to the first D2D UE through signalling twice,
wherein a first signalling indicates the configured D2D sub-frame through a high layer signalling, and the configured D2D sub-frame is in a set of sub-frames used for carrying D2D data; and a second signalling indicates at least one specific D2D transmitting sub-frame or at least one specific D2D receiving sub-frame in the configured D2D sub-frame set through a high layer signalling or a physical layer signalling;
or,
indicating, by a network side entity or a second D2D UE corresponding to the first D2D UE, a configured D2D transmitting sub-frame to the first D2D UE through signalling twice;
wherein a first signalling indicates the configured D2D transmitting sub-frame through a high layer signalling, the configured D2D transmitting sub-frame is in a set of sub-frames used for transmitting D2D data; a second signalling indicates at least one specific D2D transmitting sub-frame in the configured D2D transmitting sub-frame set through a high layer signalling or a physical layer signalling;
or,
indicating, by a network side entity or a second D2D UE corresponding to the first D2D UE, a configured D2D receiving sub-frame to the first D2D UE through signalling twice;
wherein a first signalling indicates the configured D2D receiving sub-frame through a high layer signalling, the configured D2D receiving sub-frame is in a set of sub-frames used for receiving D2D data; a second signalling indicates at least one specific D2D receiving sub-frame in the configured D2D receiving sub-frame set through a high layer signalling or a physical layer signalling,
wherein the D2D transmitting sub-frame and the D2D receiving sub-frame are system uplink sub-frames, and wherein the high layer signalling comprises at least one of: a D2D connection setup request message, D2D connection setup response message, a D2D connection reconfiguration message, a System Information Block, SIB, or a D2D broadcast message; and
the physical layer signalling comprises at least one of Downlink Control Information, DCI, or a dedicated D2D communication control message, and
wherein the high layer signalling comprises at least one of the following parameters: D2D-SubframeConfigPattern,D2D-radioframeAllocationPeriod,D2D-radioframeAllocatio nOffset, or D2D-SubframeAllocation.

**2.** The method for indicating sub-frame configuration in D2D communication according to claim 1, wherein the D2D sub-frame configured through the high layer signalling serving as the first signalling comprises at least one of:
a public D2D sub-frame of a cell, a public D2D sub-frame of a D2D communication group, a D2D sub-frame of a D2D UE pair, or a D2D sub-frame of a D2D UE.

**3.** The method for indicating sub-frame configuration in D2D communication according to claim 1, wherein the physical layer signalling comprises at least one of the following parameters: D2D-SubframeConfigPattern or D2D-SubframeAllocation.

**4.** The method for indicating sub-frame configuration in D2D communication according to claim 1, wherein when the configured D2D sub-frame, D2D transmitting sub-frame or D2D receiving sub-frame is indicated through the D2D-radioframeAllocationPeriod, the D2D-radioframeAllocationOffset and the D2D-SubframeAllocation, the method comprises:

a radio frame where the configured D2D sub-frame, D2D transmitting sub-frame or D2D receiving sub-frame locates is indicated through the D2D-radioframeAllocationPeriod and the D2D-radioframeAllocationOffset, that is, the radio frame where the configured D2D sub-frame, D2D transmitting sub-frame or D2D receiving sub-frame locates is a radio frame satisfying a following relation: a radio frame number mod the D2D-radioframeAllocationPeriod is equal to the D2D-radioframeAllocationOffset;
the configured D2D sub-frame, D2D transmitting sub-frame or D2D receiving sub-frame is indicated through the D2D-SubframeAllocation in combination with the radio frame where the D2D sub-frame, the D2D transmitting sub-frame or the D2D receiving sub-frame locates, wherein the D2D-SubframeAllocation is 10bit or 40bit indication information which is respectively in one-to-one correspondence with sub-frames in the radio frame where the D2D sub-frame, the D2D transmitting sub-frame or the D2D receiving sub-frame locates, that is, the D2D sub-frame, the D2D transmitting sub-frame or the D2D receiving sub-frame configured in the radio frame where the D2D sub-frame, the D2D transmitting sub-frame or the D2D receiving sub-frame locates is indicated by means of a bitmap.

**5.** The method for indicating sub-frame configuration in D2D communication according to claim 4, wherein values of the D2D-radioframeAllocationPeriod are [1,2,4,8,16,32] and values of the D2D-radioframeAllocationOffset are [0,1,2,3,4,5,6,7].

**6.** The method for indicating sub-frame configuration in D2D communication according to any one of claims 1 to 3, wherein the network side entity comprises at least one of the following:
an evolved NodeB, eNB, a Multi-cell/multicast Coordination Entity, MCE, a Gateway, GW, a Mobility Management Entity, MME, an Evolved Universal Terrestrial Radio Access Network, EUTRAN, entity or an Operation Administration and Maintenance, OAM, manager.

**7.** A system for indicating sub-frame configuration in Device-to-Device, D2D, communication, comprising:

a sub-frame configuration module, arranged to configure a D2D sub-frame, a D2D transmitting sub-frame or a D2D receiving sub-frame, wherein the D2D transmitting sub-frame and the D2D receiving sub-frame are system uplink sub-frames; and
an indication module, arranged to:

indicate the configured D2D sub-frame to a first D2D UE through signalling twice,
wherein a first signalling indicates the configured D2D sub-frame through a high layer signalling, and the configured D2D sub-frame is in a set of sub-frames used for carrying D2D data; and a second signalling indicates at least one specific D2D transmitting sub-frame or at least one specific D2D receiving sub-frame in the configured D2D sub-frame set through a high layer signalling or a physical layer signalling;

or,

indicate the configured D2D transmitting sub-frame to a first D2D UE through signalling twice;

wherein a first signalling indicates the configured D2D transmitting sub-frame through a high layer signalling, the configured D2D transmitting sub-frame is in a set of sub-frames used for transmitting D2D data; a second signalling indicates at least one specific D2D transmitting sub-frame in the configured D2D transmitting sub-frame set through a high layer signalling or a physical layer signalling;

or,

indicate the configured D2D receiving sub-frame to a first D2D UE through signalling twice;

wherein a first signalling indicates the configured D2D receiving sub-frame through a high layer signalling, the configured D2D receiving sub-frame is in a set of sub-frames used for receiving D2D data; a second signalling indicates at least one specific D2D receiving sub-frame in the configured D2D receiving sub-frame set through a high layer signalling or a physical layer signalling,

wherein the high layer signalling comprises at least one of the following: a D2D connection setup request message, D2D connection setup response message, a D2D connection reconfiguration message, a System Information Block, SIB, or a D2D broadcast message; and

the physical layer signalling comprises at least one of Downlink Control Information, DCI, or a dedicated D2D communication control message; and

wherein the high layer signalling comprises at least one of the following: D2D-SubframeConfigPattern,D2D-radioframeAllocationPeriod, D2D-radioframeAllocationOffset, or D2D-SubframeAllocation.

**8.** The system for indicating sub-frame configuration in D2D communication according to claim 7, wherein the D2D sub-frame configured through the high layer signalling serving as the first signalling comprises at least one of the following:

a public D2D sub-frame of a cell, a public D2D sub-frame of a D2D communication group, a D2D sub-frame of a D2D User Equipment, UE, pair, or a D2D sub-frame of a D2D UE.

**9.** The system for indicating sub-frame configuration in D2D communication according to claim 7, wherein the physical layer signalling comprises at least one of the following parameters: D2D-SubframeConfigPattern or D2D-SubframeAllocation.

**10.** The system for indicating sub-frame configuration in D2D communication according to claim 7, wherein when the indication module is configured to indicate the configured D2D sub-frame, D2D transmitting sub-frame or D2D receiving sub-frame through the D2D-radioframeAllocationPeriod, the D2D-radioframeAllocationOffset and the D2D-SubframeAllocation, the indication module is configured to:

indicate, through the D2D-radioframeAllocationPeriod and the D2D-radioframeAllocationOffset, a radio frame where the configured D2D sub-frame, D2D transmitting sub-frame or D2D receiving sub-frame locates, that is, the radio frame where the configured D2D sub-frame, D2D transmitting sub-frame or D2D receiving sub-frame locates is a radio frame satisfying a following relation: a radio frame number mod the D2D-radioframeAllocationPeriod is equal to the D2D-radioframeAllocationOffset;

indicate the configured D2D sub-frame, D2D transmitting sub-frame or D2D receiving sub-frame through D2D-SubframeAllocation in combination with the radio frame where the D2D sub-frame, the D2D transmitting sub-frame or the D2D receiving sub-frame locates, wherein the D2D-SubframeAllocation is 10bit or 40bit indication information which is respectively in one-to-one correspondence with sub-frames in the radio frame where the D2D sub-frame, the D2D transmitting sub-frame or the D2D receiving sub-frame locates, that is, the D2D sub-frame, the D2D transmitting sub-frame or the D2D receiving sub-frame configured in the radio frame where the D2D sub-frame, the D2D transmitting sub-frame or the D2D receiving sub-frame locates is indicated by means of a bitmap.

**11.** The system for indicating sub-frame configuration in D2D communication according to any one of claims 7 to 9, wherein the system is located in a network side entity and at least one of the high layer signalling or the physical layer signalling is sent by the indication module in the network side entity to a D2D UE; or

the system is located in a second D2D UE corresponding to a first D2D UE, and at least one of the high layer signalling or the physical layer signalling is sent by the indication module in the second D2D UE to the first D2D UE;

wherein the network side entity comprises at least one of:

an evolved NodeB, eNB, a Multi-cell/multicast Coordination Entity, MCE, a Gateway, GW, a Mobility Management Entity, MME, an Evolved Universal Terrestrial Radio Access Network, EUTRAN, entity or an Operation Administration and Maintenance, OAM, manager.

## Patentansprüche

1. Verfahren zur Anzeige einer Unterrahmenkonfiguration bei Gerät-zu-Gerät, D2D,-Kommunikation, umfassend:

    Anzeigen durch eine netzwerkseitige Entität oder eine zweite D2D-UE, die der ersten D2D-UE entspricht, eines konfigurierten D2D-Unterrahmens für die erste D2D-UE durch zweimalige Signalisierung,
    wobei eine erste Signalisierung den konfigurierten D2D-Unterrahmen durch eine Signalisierung der oberen Schichten anzeigt, und der konfigurierte D2D-Unterrahmen in einem Satz von Unterrahmen ist, die zum Übertragen von D2D-Daten verwendet werden; und eine zweite Signalisierung mindestens einen spezifischen D2D-Sendeunterrahmen oder mindestens einen spezifischen D2D-Empfangsunterrahmen im Satz konfigurierter D2D-Unterrahmen durch eine Signalisierung der oberen Schichten oder eine Signalisierung der physikalischen Schicht anzeigt;
    oder
    Anzeigen durch eine netzwerkseitige Entität oder eine zweite D2D-UE, die der ersten D2D-UE entspricht, eines konfigurierten D2D-Sendeunterrahmens für die erste D2D-UE durch zweimalige Signalisierung;
    wobei eine erste Signalisierung den konfigurierten D2D-Sendeunterrahmen durch eine Signalisierung der oberen Schichten anzeigt, wobei der konfigurierte D2D-Sendeunterrahmen in einem Satz von Unterrahmen ist, die zum Senden von D2D-Daten verwendet werden; eine zweite Signalisierung mindestens einen spezifischen D2D-Sendeunterrahmen im Satz konfigurierter D2D-Sendeunterrahmen durch eine Signalisierung der oberen Schichten oder eine Signalisierung der physikalischen Schicht anzeigt;
    oder
    Anzeigen durch eine netzwerkseitige Entität oder eine zweite D2D-UE, die der ersten D2D-UE entspricht, eines konfigurierten D2D-Empfangsunterrahmens für die erste D2D-UE durch zweimalige Signalisierung;
    wobei eine erste Signalisierung den konfigurierten D2D-Empfangsunterrahmen durch eine Signalisierung der oberen Schichten anzeigt, wobei der konfigurierte D2D-Empfangsunterrahmen in einem Satz von Unterrahmen ist, die zum Empfangen von D2D-Daten verwendet werden; eine zweite Signalisierung mindestens einen spezifischen D2D-Empfangsunterrahmen im Satz konfigurierter D2D-Empfangsunterrahmen durch eine Signalisierung der oberen Schichten oder eine Signalisierung der physikalischen Schicht anzeigt,
    wobei der D2D-Sendeunterrahmen und der D2D-Empfangsunterrahmen Uplink-Systemunterrahmen sind, und wobei die Signalisierung der oberen Schichten mindestens eines umfasst von: einer D2D-Verbindungsaufbauanforderungsnachricht, einer D2D-Verbindungsaufbauantwortnachricht, einer D2D-Verbindungsrekonfigurationsnachricht, einem Systeminformationsblock, SIB, oder einer D2D-Broadcast-Nachricht; und
    die Signalisierung der physikalischen Schicht mindestens eines von Downlink-Steuerinformationen, DCI, oder einer dedizierten D2D-Kommunikationssteuernachricht umfasst, und
    wobei die Signalisierung der oberen Schichten mindestens einen der folgenden Parameter umfasst: D2D-SubframeConfigPattern, D2D-radioframeAllocationPeriod, D2D-radioframeAllocationOffset oder D2D-SubframeAllocation.

2. Verfahren zur Anzeige einer Unterrahmenkonfiguration bei D2D-Kommunikation nach Anspruch 1, wobei der D2D-Unterrahmen, der durch die Signalisierung der oberen Schichten konfiguriert wird, die als die erste Signalisierung dient, mindestens eines von Folgenden umfasst:
    einen öffentlichen D2D-Unterrahmen einer Zelle, einen öffentlichen D2D-Unterrahmen einer D2D-Kommunikationsgruppe, einen D2D-Unterrahmen eines D2D-UE-Paares oder einen D2D-Unterrahmen einer D2D-UE.

3. Verfahren zur Anzeige einer Unterrahmenkonfiguration bei D2D-Kommunikation nach Anspruch 1, wobei die Signalisierung der physikalischen Schicht mindestens einen der folgenden Parameter umfasst: D2D-SubframeConfigPattern oder D2D-SubframeAllocation.

4. Verfahren zur Anzeige einer Unterrahmenkonfiguration bei D2D-Kommunikation nach Anspruch 1, wobei das Verfahren, wenn der konfigurierte D2D-Unterrahmen, der D2D-Sendeunterrahmen oder der D2D-Empfangsunterrahmen durch die D2D-radioframeAllocationPeriod, den D2D-radioframeAllocationOffset und die D2D-SubframeAllocation angezeigt wird, umfasst, dass:

ein Funkrahmen, in welchem sich der konfigurierte D2D-Unterrahmen, der D2D-Sendeunterrahmen oder der D2D-Empfangsunterrahmen befindet, durch die D2D-radioframeAllocationPeriod und den D2D-radioframeAllocationOffset angezeigt wird, das heißt der Funkrahmen, in welchem sich der konfigurierte D2D-Unterrahmen, der D2D-Sendeunterrahmen oder der D2D-Empfangsunterrahmen befindet, ein Funkrahmen ist, der eine folgende Beziehung erfüllt: eine Funkrahmennummer mod der D2D-radioframeAllocationPeriod ist gleich dem D2D-radioframeAllocationOffset;
der konfigurierte D2D-Unterrahmen, der D2D-Sendeunterrahmen oder der D2D-Empfangsunterrahmen durch die D2D-SubframeAllocation zusammen mit dem Funkrahmen angezeigt wird, in welchem sich der D2D-Unterrahmen, der D2D-Sendeunterrahmen oder der D2D-Empfangsunterrahmen befindet, wobei die D2D-SubframeAllocation eine 10-Bit- oder 40-Bit-Anzeigeinformation ist, die jeweils in einer Eins-zu-eins-Entsprechung zu Unterrahmen im Funkrahmen ist, in welchem sich der D2D-Unterrahmen, der D2D-Sendeunterrahmen oder der D2D-Empfangsunterrahmen befindet, das heißt der D2D-Unterrahmen, der D2D-Sendeunterrahmen oder der D2D-Empfangsunterrahmen, der im Funkrahmen konfiguriert ist, in welchem sich der D2D-Unterrahmen, der D2D-Sendeunterrahmen oder der D2D-Empfangsunterrahmen befindet, mittels einer Bitmap angezeigt wird.

**5.** Verfahren zur Anzeige einer Unterrahmenkonfiguration bei D2D-Kommunikation nach Anspruch 4, wobei die Werte der D2D-radioframeAllocationPeriod [1, 2, 4, 8,16, 32] sind, und die Werte des D2D-radioframeAllocationOffset [0, 1, 2, 3, 4, 5, 6, 7] sind.

**6.** Verfahren zur Anzeige einer Unterrahmenkonfiguration bei D2D-Kommunikation nach einem der Ansprüche 1 bis 3, wobei die netzwerkseitige Entität mindestens eines von Folgenden umfasst:
einen evolvierten NodeB, eNB, eine Mehrfachzellen-/Multicast-Koordinationsentität, MCE, ein Gateway, GW, eine Mobilitätsverwaltungsentität, MME, eine Entität eines evolvierten universellen terrestrischen Funkzugangsnetzwerks, EUTRAN, oder einen Betriebs-, Verwaltungs- und Wartungs, OAM,-Verwalter.

**7.** System zum Anzeigen einer Unterrahmenkonfiguration bei Gerät-zu-Gerät, D2D,-Kommunikation, umfassend:

ein Unterrahmenkonfigurationsmodul, das zum Konfigurieren eines D2D-Unterrahmens, eines D2D-Sendeunterrahmens oder eines D2D-Empfangsunterrahmens ausgelegt ist, wobei der D2D-Sendeunterrahmen und der D2D-Empfangsunterrahmen Uplink-Systemunterrahmen sind; und
ein Anzeigemodul, das ausgelegt ist zum:

Anzeigen des konfigurierten D2D-Unterrahmens für eine erste D2D-UE durch zweimalige Signalisierung;
wobei eine erste Signalisierung den konfigurierten D2D-Unterrahmen durch eine Signalisierung der oberen Schichten anzeigt, und der konfigurierte D2D-Unterrahmen in einem Satz von Unterrahmen ist, die zum Übertragen von D2D-Daten verwendet werden; und eine zweite Signalisierung mindestens einen spezifischen D2D-Sendeunterrahmen oder mindestens einen spezifischen D2D-Empfangsunterrahmen im Satz konfigurierter D2D-Unterrahmen durch eine Signalisierung der oberen Schichten oder eine Signalisierung der physikalischen Schicht anzeigt;
oder
Anzeigen des konfigurierten D2D-Sendeunterrahmens für eine erste D2D-UE durch zweimalige Signalisierung;
wobei eine erste Signalisierung den konfigurierten D2D-Sendeunterrahmen durch eine Signalisierung der oberen Schichten anzeigt, wobei der konfigurierte D2D-Sendeunterrahmen in einem Satz von Unterrahmen ist, die zum Senden von D2D-Daten verwendet werden; eine zweite Signalisierung mindestens einen spezifischen D2D-Sendeunterrahmen im Satz konfigurierter D2D-Sendeunterrahmen durch eine Signalisierung der oberen Schichten oder eine Signalisierung der physikalischen Schicht anzeigt;
oder
Anzeigen des konfigurierten D2D-Empfangsunterrahmens für eine erste D2D-UE durch zweimalige Signalisierung;
wobei eine erste Signalisierung den konfigurierten D2D-Empfangsunterrahmen durch eine Signalisierung der oberen Schichten anzeigt, wobei der konfigurierte D2D-Empfangsunterrahmen in einem Satz von Unterrahmen ist, die zum Empfangen von D2D-Daten verwendet werden; eine zweite Signalisierung mindestens einen spezifischen D2D-Empfangsunterrahmen im Satz konfigurierter D2D-Empfangsunterrahmen durch eine Signalisierung der oberen Schichten oder eine Signalisierung der physikalischen Schicht anzeigt,
wobei die Signalisierung der oberen Schichten mindestens eines von Folgenden umfasst: eine D2D-Verbindungsaufbauanforderungsnachricht, eine D2D-Verbindungsaufbauantwortnachricht, eine D2D-Verbindungsrekonfigurationsnachricht, einen Systeminformationsblock, SIB, oder eine D2D-Broadcast-Nachricht; und
die Signalisierung der physikalischen Schicht mindestens eines von Downlink-Steuerinformationen, DCI, oder einer dedizierten D2D-Kommunikationssteuernachricht umfasst; und

wobei die Signalisierung der oberen Schichten mindestens eines von Folgenden umfasst: D2D-SubframeConfigPattern, D2D-radioframeAllocationPeriod, D2D-radioframeAllocationOffset oder D2D-SubframeAllocation.

**8.** System zum Anzeigen einer Unterrahmenkonfiguration bei D2D-Kommunikation nach Anspruch 7, wobei der D2D-Unterrahmen, der durch die Signalisierung der oberen Schichten konfiguriert wird, die als die erste Signalisierung dient, mindestens eines von Folgenden umfasst:
einen öffentlichen D2D-Unterrahmen einer Zelle, einen öffentlichen D2D-Unterrahmen einer D2D-Kommunikationsgruppe, einen D2D-Unterrahmen eines D2D-Benutzereinrichtungs, UE,-Paares oder einen D2D-Unterrahmen einer D2D-UE.

**9.** System zum Anzeigen einer Unterrahmenkonfiguration bei D2D-Kommunikation nach Anspruch 7, wobei die Signalisierung der physikalischen Schicht mindestens einen der folgenden Parameter umfasst: D2D-SubframeConfigPattern oder D2D-SubframeAllocation.

**10.** System zum Anzeigen einer Unterrahmenkonfiguration bei D2D-Kommunikation nach Anspruch 7, wobei, wenn das Anzeigemodul zum Anzeigen des konfigurierten D2D-Unterrahmens, des D2D-Sendeunterrahmens oder des D2D-Empfangsunterrahmens durch die D2D-radioframeAllocationPeriod, den D2D-radioframeAllocationOffset und die D2D-SubframeAllocationan konfiguriert ist, das Anzeigemodul konfiguriert ist zum:

Anzeigen eines Funkrahmens, in welchem sich der konfigurierte D2D-Unterrahmen, der D2D-Sendeunterrahmen oder der D2D-Empfangsunterrahmen befindet, durch die D2D-radioframeAllocationPeriod und den D2D-radioframeAllocationOffset, das heißt der Funkrahmen, in welchem sich der konfigurierte D2D-Unterrahmen, der D2D-Sendeunterrahmen oder der D2D-Empfangsunterrahmen befindet, ist ein Funkrahmen, der eine folgende Beziehung erfüllt: eine Funkrahmennummer mod der D2D-radioframeAllocationPeriod ist gleich dem D2D-radioframeAllocationOffset;
Anzeigen des konfigurierten D2D-Unterrahmens, des D2D-Sendeunterrahmens oder des D2D-Empfangsunterrahmens durch die D2D-SubframeAllocation zusammen mit dem Funkrahmen, in welchem sich der D2D-Unterrahmen, der D2D-Sendeunterrahmen oder der D2D-Empfangsunterrahmen befindet, wobei die D2D-SubframeAllocation eine 10-Bit- oder 40-Bit-Anzeigeinformation ist, die jeweils in einer Eins-zu-eins-Entsprechung zu Unterrahmen im Funkrahmen ist, in welchem sich der D2D-Unterrahmen, der D2D-Sendeunterrahmen oder der D2D-Empfangsunterrahmen befindet, das heißt der D2D-Unterrahmen, der D2D-Sendeunterrahmen oder der D2D-Empfangsunterrahmen, der im Funkrahmen konfiguriert ist, in welchem sich der D2D-Unterrahmen, der D2D-Sendeunterrahmen oder der D2D-Empfangsunterrahmen befindet, wird mittels einer Bitmap angezeigt.

**11.** System zum Anzeigen einer Unterrahmenkonfiguration bei D2D-Kommunikation nach einem der Ansprüche 7 bis 9, wobei das System sich in einer netzwerkseitigen Entität befindet, und mindestens eine der Signalisierung der oberen Schichten oder der Signalisierung der physikalischen Schicht durch das Anzeigemodul in der netzwerkseitigen Entität an eine D2D-UE gesendet wird; oder
das System sich in einer zweiten D2D-UE befindet, die der ersten D2D-UE, entspricht, und mindestens eine der Signalisierung der oberen Schichten oder der Signalisierung der physikalischen Schicht durch das Anzeigemodul in der zweiten D2D-UE an die erste D2D-UE gesendet wird;
wobei die netzwerkseitige Entität mindestens eines von Folgenden umfasst:
einen evolvierten NodeB, eNB, eine Mehrfachzellen-/Multicast-Koordinationsentität, MCE, ein Gateway, GW, eine Mobilitätsverwaltungsentität, MME, eine Entität eines evolvierten universellen terrestrischen Funkzugangsnetzwerks, EUTRAN, oder einen Betriebs-, Verwaltungs- und Wartungs, OAM,-Verwalter.

## Revendications

**1.** Procédé d’indication de configuration de sous-trame dans une communication de dispositif à dispositif, D2D, comprenant les étapes ci-dessous consistant à :

indiquer, par le biais d'une entité côté réseau ou d'un second équipement UE D2D correspondant au premier équipement UE D2D, une sous-trame D2D configurée, au premier équipement UE D2D, par le biais d'une double signalisation ;

dans lequel une première signalisation indique la sous-trame D2D configurée par le biais d'une signalisation de couche élevée, et la sous-trame D2D configurée est dans un ensemble de sous-trames utilisé en vue de transporter des données D2D ; et une seconde signalisation indique au moins une sous-trame de transmission D2D spécifique ou au moins une sous-trame de réception D2D spécifique dans l'ensemble de sous-trames D2D configurées, par le biais d'une signalisation de couche élevée ou d'une signalisation de couche physique ; ou

indiquer, par le biais d'une entité côté réseau ou d'un second équipement UE D2D correspondant au premier équipement UE D2D, une sous-trame de transmission D2D configurée, au premier équipement UE D2D, par le biais d'une double signalisation ;

dans lequel une première signalisation indique la sous-trame de transmission D2D configurée par le biais d'une signalisation de couche élevée, la sous-trame de transmission D2D configurée est dans un ensemble de sous-trames utilisé en vue de transmettre des données D2D ; une seconde signalisation indique au moins une sous-trame de transmission D2D spécifique dans l'ensemble de sous-trames de transmission D2D configurées, par le biais d'une signalisation de couche élevée ou d'une signalisation de couche physique ; ou

indiquer, par le biais d'une entité côté réseau ou d'un second équipement UE D2D correspondant au premier équipement UE D2D, une sous-trame de réception D2D configurée au premier équipement UE D2D, par le biais d'une double signalisation ;

dans lequel une première signalisation indique la sous-trame de réception D2D configurée par le biais d'une signalisation de couche élevée, la sous-trame de réception D2D configurée est dans un ensemble de sous-trames utilisé pour recevoir des données D2D ; une seconde signalisation indique au moins une sous-trame de réception D2D spécifique dans l'ensemble de sous-trames de réception D2D configurées, par le biais d'une signalisation de couche élevée ou d'une signalisation de couche physique ;

dans lequel la sous-trame de transmission D2D et la sous-trame de réception D2D sont des sous-trames de liaison montante de système ; et

dans lequel la signalisation de couche élevée comprend au moins l'un des éléments ci-après : un message de demande d'établissement de connexion D2D, un message de réponse d'établissement de connexion D2D, un message de reconfiguration de connexion D2D, un bloc d'informations système, SIB, ou un message de diffusion D2D ; et

la signalisation de couche physique comprend au moins l'un des éléments parmi des informations de commande de liaison descendante, DCI, ou un message de commande de communication D2D dédiée ; et

dans lequel la signalisation de couche élevée comprend au moins l'un des paramètres suivants : « D2D-SubframeConfigPattern », « D2D-radioframeAllocationPeriod », « D2D-radioframeAllocationOffset », ou « D2D-SubframeAllocation ».

2. Procédé d'indication de configuration de sous-trame dans une communication D2D selon la revendication 1, dans lequel la sous-trame D2D configurée par le biais de la signalisation de couche élevée faisant office de première signalisation comprend au moins l'un des éléments parmi :
une sous-trame D2D publique d'une cellule, une sous-trame D2D publique d'un groupe de communication D2D, une sous-trame D2D d'une paire d'équipements UE D2D ou une sous-trame D2D d'un équipement UE D2D.

3. Procédé d'indication de configuration de sous-trame dans une communication D2D selon la revendication 1, dans lequel la signalisation de couche physique comprend au moins l'un des paramètres suivants : « D2D-SubframeConfigPattern » ou « D2D-SubframeAllocation ».

4. Procédé d'indication de configuration de sous-trame dans une communication D2D selon la revendication 1, dans lequel, lorsque la sous-trame D2D configurée, une sous-trame de transmission D2D, ou une sous-trame de réception D2D, est indiquée par le biais du paramètre « D2D-radioframeAllocationPeriod », du paramètre « D2D-radioframeAllocationOffset », ou du paramètre « D2D-SubframeAllocation », le procédé comprend :

une trame radio où la sous-trame D2D configurée, la sous-trame de transmission D2D, ou la sous-trame de réception D2D, est indiquée par le biais du paramètre « D2D-radioframeAllocationPeriod » et du paramètre « D2D-radioframeAllocationOffset », à savoir, la trame radio où la sous-trame D2D configurée, la sous-trame de transmission D2D, ou la sous-trame de réception D2D, se situe, est une trame radio satisfaisant une relation suivante : un numéro de trame radio d'opérateur modulo du paramètre « D2D-radioframeAllocationPeriod » est égal au paramètre « D2D-radioframeAllocationOffset » ;

la sous-trame D2D configurée, la sous-trame de transmission D2D ou la sous-trame de réception D2D configurée est indiquée à travers le paramètre « D2D-SubframeAllocation » en combinaison avec la trame radio où se situe la sous-trame D2D, la sous-trame de transmission D2D, ou la sous-trame de réception D2D, dans lequel le paramètre « D2D-SubframeAllocation » correspond à des informations d'indication de 10 bits ou 40 bits qui sont respectivement dans une correspondance biunivoque avec des sous-trames dans la trame radio où se situe la sous-trame D2D, la sous-trame de transmission D2D ou la sous-trame de réception D2D, à savoir, la sous-trame D2D, la sous-trame de transmission D2D ou la sous-trame de réception D2D configurée dans la trame radio où se situe la sous-trame D2D, la sous-trame de transmission D2D ou la sous-trame de réception D2D est indiquée par un topogramme binaire.

**5.** Procédé d'indication de configuration de sous-trame dans une communication D2D selon la revendication 4, dans lequel des valeurs du paramètre « D2D-radioframeAllocationPeriod » sont [1, 2, 4, 8, 16, 32] et des valeurs du paramètre « D2D-radioframeAllocationOffset » sont [0, 1, 2, 3, 4, 5, 6, 7].

**6.** Procédé d'indication de configuration de sous-trame dans une communication D2D selon l'une quelconque des revendications 1 à 3, dans lequel l'entité côté réseau comprend au moins l'un des éléments suivants :
une station « NodeB » évoluée, eNB, une entité de coordination de service de radiodiffusion multimédia multidestinataire, MCE, une passerelle, GW, une entité de gestion de la mobilité, MME, une entité de réseau d'accès radio terrestre universel évolué, EUTRAN, ou un gestionnaire de gestion, d'exploitation et de maintenance, OAM.

**7.** Système destiné à indiquer une configuration de sous-trame dans une communication de dispositif à dispositif, D2D, comprenant :

un module de configuration de sous-trame, agencé de manière à configurer une sous-trame D2D, une sous-trame de transmission D2D ou une sous-trame de réception D2D, dans lequel la sous-trame de transmission D2D et la sous-trame de réception D2D sont des sous-trames de liaison montante de système ; et
un module d'indication, agencé de manière à :
indiquer la sous-trame D2D configurée à un premier équipement UE D2D, par le biais d'une double signalisation ;
dans lequel une première signalisation indique la sous-trame D2D configurée par le biais d'une signalisation de couche élevée, et la sous-trame D2D configurée est dans un ensemble de sous-trames utilisé en vue de transporter des données D2D ; et une seconde signalisation indique au moins une sous-trame de transmission D2D spécifique ou au moins une sous-trame de réception D2D spécifique dans l'ensemble de sous-trames D2D configurées, par le biais d'une signalisation de couche élevée ou d'une signalisation de couche physique ; ou
indiquer la sous-trame de transmission D2D configurée à un premier équipement UE D2D, par le biais d'une double signalisation ;
dans lequel une première signalisation indique la sous-trame de transmission D2D configurée par le biais d'une signalisation de couche élevée, la sous-trame de transmission D2D configurée est dans un ensemble de sous-trames utilisé en vue de transmettre des données D2D ; une seconde signalisation indique au moins une sous-trame de transmission D2D spécifique dans l'ensemble de sous-trames de transmission D2D configurées, par le biais d'une signalisation de couche élevée ou d'une signalisation de couche physique ; ou
indiquer la sous-trame de réception D2D configurée à un premier équipement UE D2D, par le biais d'une double signalisation ;
dans lequel une première signalisation indique la sous-trame de réception D2D configurée par le biais d'une signalisation de couche élevée, la sous-trame de réception D2D configurée est dans un ensemble de sous-trames utilisé pour recevoir des données D2D ; une seconde signalisation indique au moins une sous-trame de réception D2D spécifique dans l'ensemble de sous-trames de réception D2D configurées, par le biais d'une signalisation de couche élevée ou d'une signalisation de couche physique ;
dans lequel la signalisation de couche élevée comprend au moins l'un des éléments ci-après : un message de demande d'établissement de connexion D2D, un message de réponse d'établissement de connexion D2D, un message de reconfiguration de connexion D2D, un bloc d'informations système, SIB, ou un message de diffusion D2D ; et
la signalisation de couche physique comprend au moins l'un des éléments parmi des informations de commande de liaison descendante, DCI, ou un message de commande de communication D2D dédiée ; et
dans lequel la signalisation de couche élevée comprend au moins l'un des paramètres suivants : « D2D-SubframeConfigPattern », « D2D-radioframeAllocationPeriod », « D2D-radioframeAllocationOffset », ou « D2D-SubframeAllocation ».

**8.** Système destiné à indiquer une configuration de sous-trame dans une communication D2D selon la revendication 7, dans lequel la sous-trame D2D configurée par le biais de la signalisation de couche élevée faisant office de première signalisation comprend au moins l'un des éléments parmi :
une sous-trame D2D publique d'une cellule, une sous-trame D2D publique d'un groupe de communication D2D, une sous-trame D2D d'une paire d'équipements utilisateur, UE, D2D, ou une sous-trame D2D d'un équipement UE D2D.

**9.** Système destiné à indiquer une configuration de sous-trame dans une communication D2D selon la revendication 7, dans lequel la signalisation de couche physique comprend au moins l'un des paramètres suivants : « D2D-SubframeConfigPattern » ou « D2D-SubframeAllocation ».

**10.** Système destiné à indiquer une configuration de sous-trame dans une communication D2D selon la revendication 7, dans lequel, lorsque le module d'indication est configuré de manière à indiquer la sous-trame D2D configurée, une sous-trame de transmission D2D, ou une sous-trame de réception D2D, par le biais du paramètre « D2D-radioframeAllocationPeriod », du paramètre « D2D-radioframeAllocationOffset », ou du paramètre « D2D-SubframeAllocation », le module d'indication est configuré de manière à :

indiquer, par le biais du paramètre « D2D-radioframeAllocationPeriod » et du paramètre « D2D-radioframeAllocationOffset », une trame radio où se situe la sous-trame D2D configurée, la sous-trame de transmission D2D, ou la sous-trame de réception D2D, à savoir, la trame radio où la sous-trame D2D configurée, la sous-trame de transmission D2D, ou la sous-trame de réception D2D, se situe est une trame radio satisfaisant une relation suivante : un numéro de trame radio d'opérateur modulo du paramètre « D2D-radioframeAllocationPeriod » est égal au paramètre « D2D-radioframeAllocationOffset » ;
indiquer la sous-trame D2D configurée, la sous-trame de transmission D2D ou la sous-trame de réception D2D configurée à travers le paramètre « D2D-SubframeAllocation » en combinaison avec la trame radio où se situe la sous-trame D2D, la sous-trame de transmission D2D, ou la sous-trame de réception D2D, dans lequel le paramètre « D2D-SubframeAllocation » correspond à des informations d'indication de 10 bits ou 40 bits qui sont respectivement dans une correspondance biunivoque avec des sous-trames dans la trame radio où se situe la sous-trame D2D, la sous-trame de transmission D2D ou la sous-trame de réception D2D, à savoir, la sous-trame D2D, la sous-trame de transmission D2D ou la sous-trame de réception D2D configurée dans la trame radio où se situe la sous-trame D2D, la sous-trame de transmission D2D ou la sous-trame de réception D2D est indiquée au moyen d'un topogramme binaire.

**11.** Système destiné à indiquer une configuration de sous-trame dans une communication D2D selon l'une quelconque des revendications 7 à 9, dans lequel le système est situé dans une entité côté réseau, et dans lequel au moins l'une parmi la signalisation de couche élevée ou la signalisation de couche physique est envoyée par le module d'indication dans l'entité côté réseau à un équipement UE D2D ; ou
le système est situé dans un second équipement UE D2D correspondant à un premier équipement UE D2D, et au moins l'une parmi la signalisation de couche élevée ou la signalisation de couche physique est envoyée par le module d'indication dans le second équipement UE D2D au premier équipement UE D2D ;
dans lequel l'entité côté réseau comprend au moins l'un des éléments parmi :
une station « NodeB » évoluée, eNB, une entité de coordination de service de radiodiffusion multimédia multidestinataire, MCE, une passerelle, GW, une entité de gestion de la mobilité, MME, une entité de réseau d'accès radio terrestre universel évolué, EUTRAN, ou un gestionnaire de gestion, d'exploitation et de maintenance, OAM.

Fig. 1

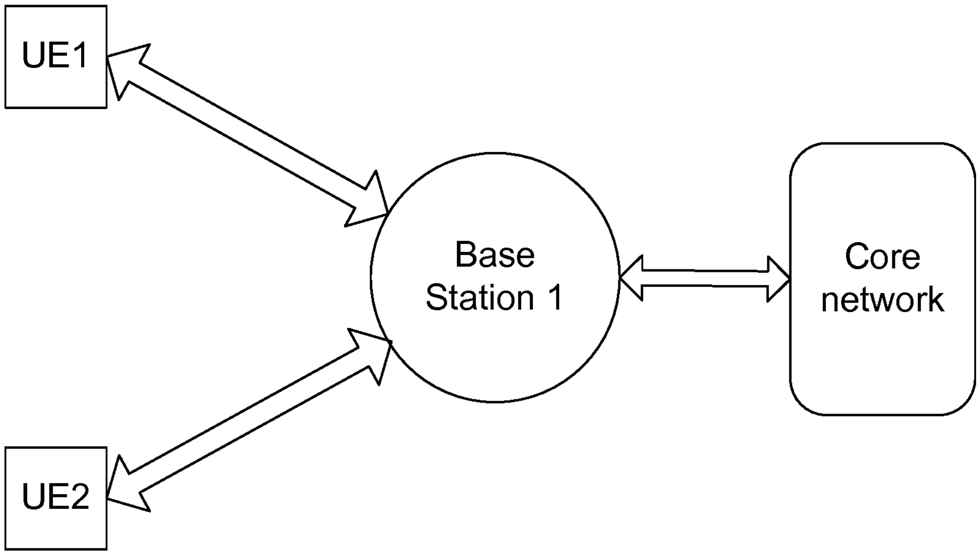


Fig. 2

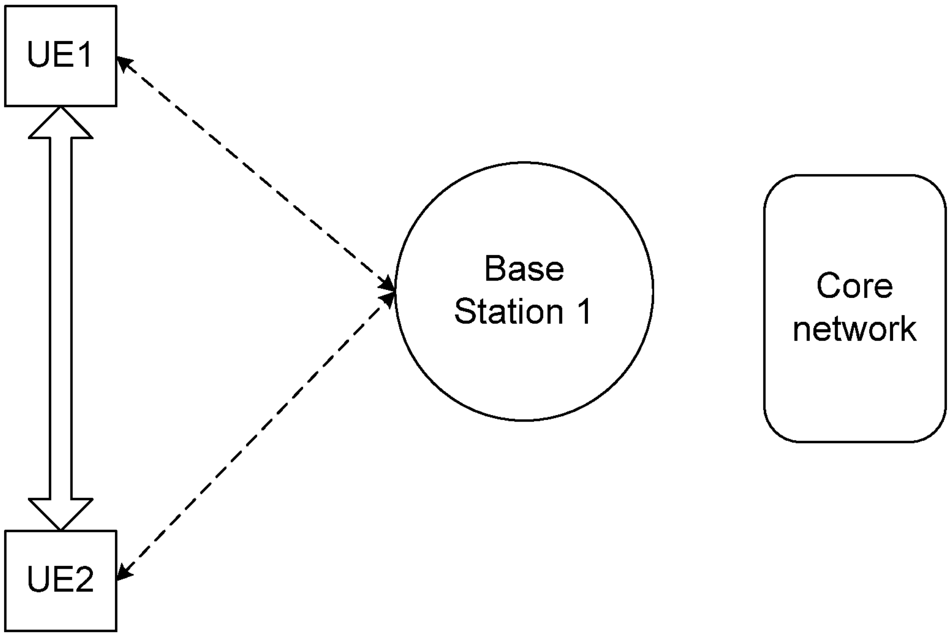


Fig. 3

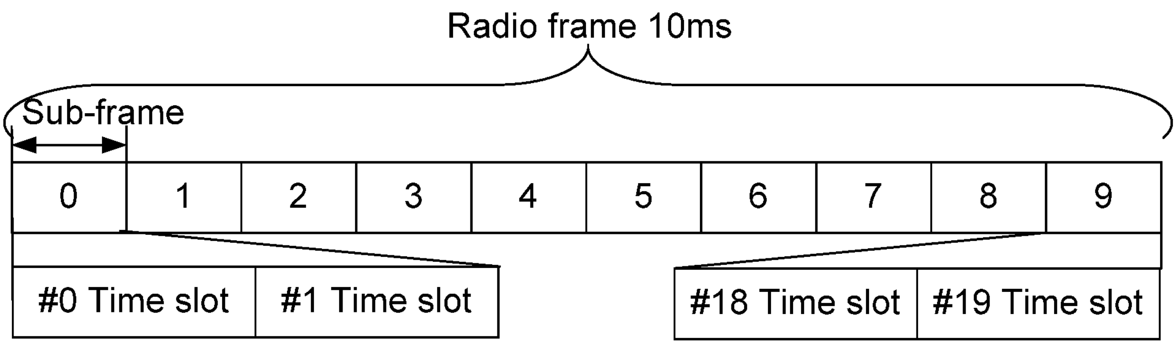

Fig. 4

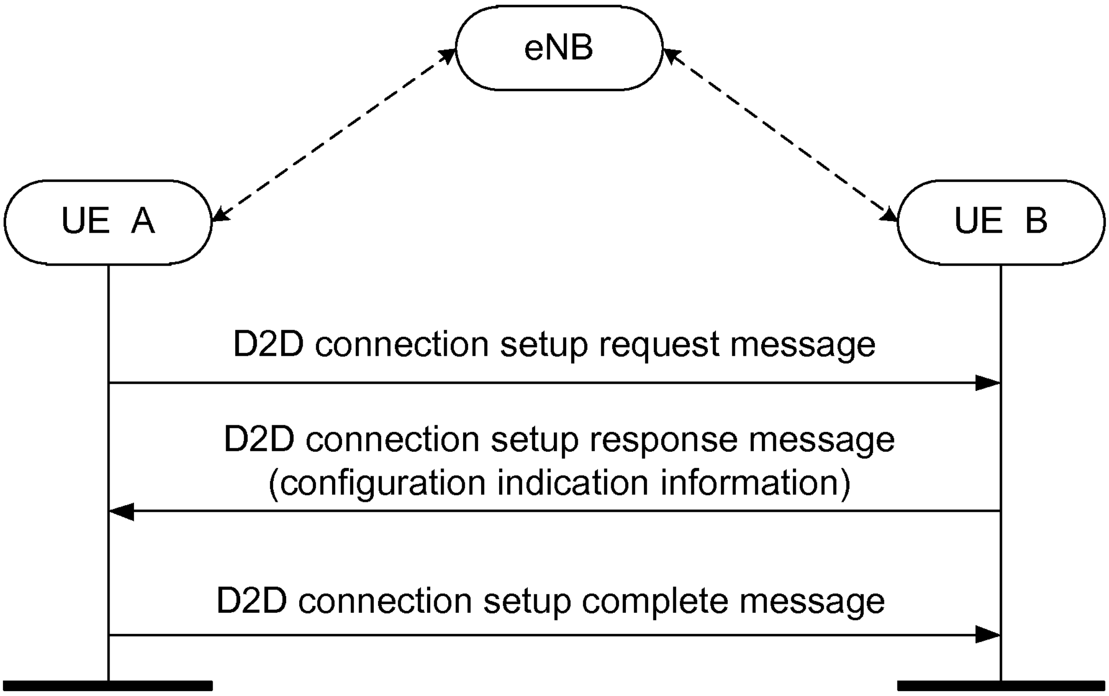


Fig. 5

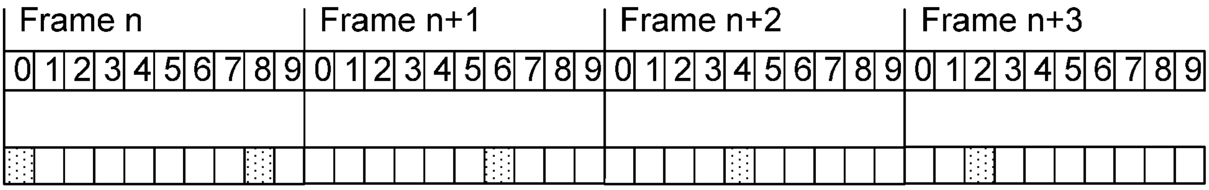


Fig. 6

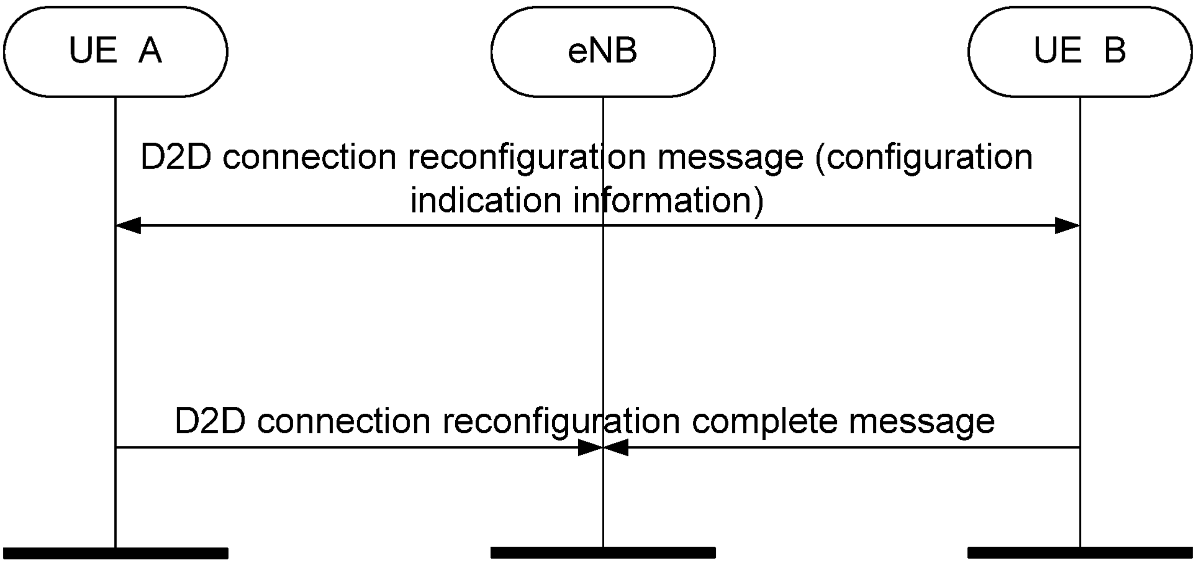

Fig. 7

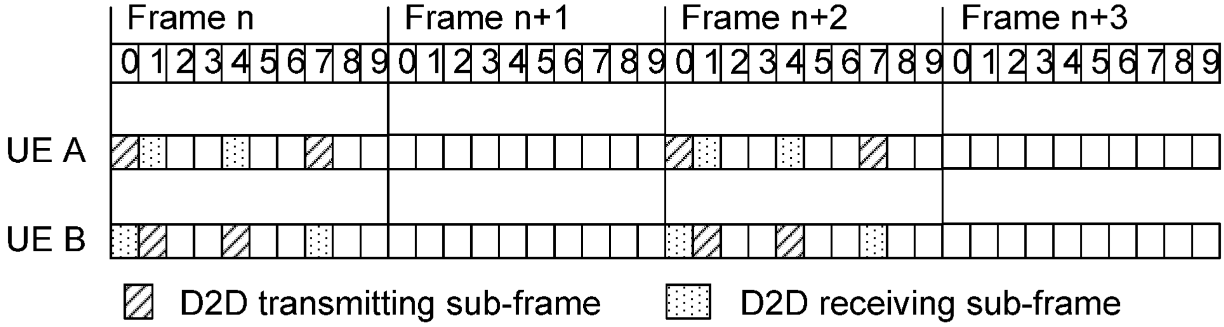


Fig. 8

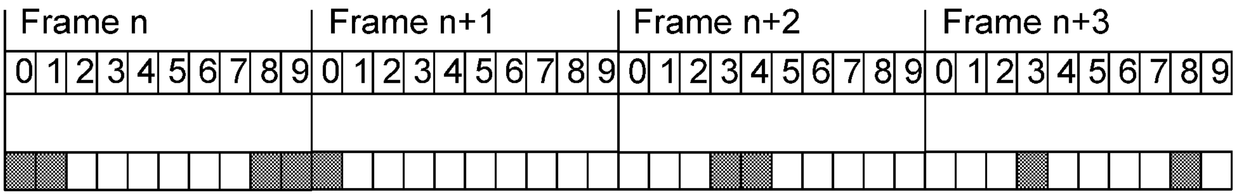


Fig. 9

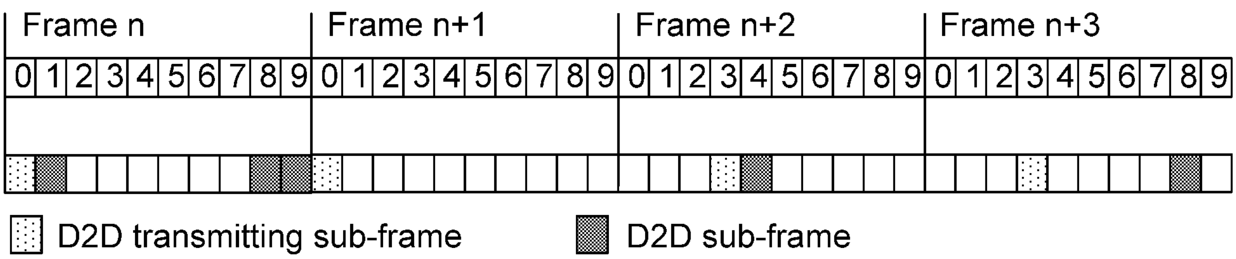


Fig. 10

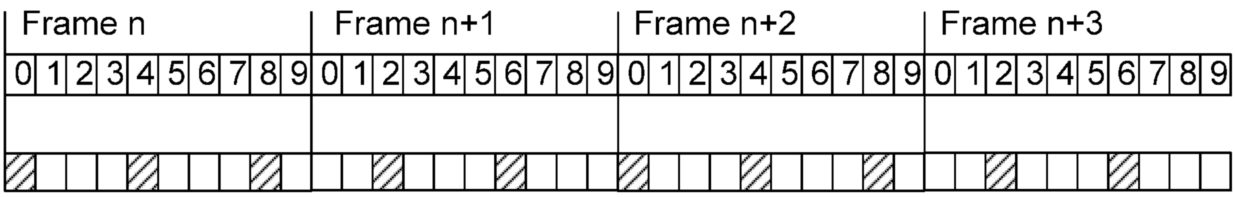

Fig. 11

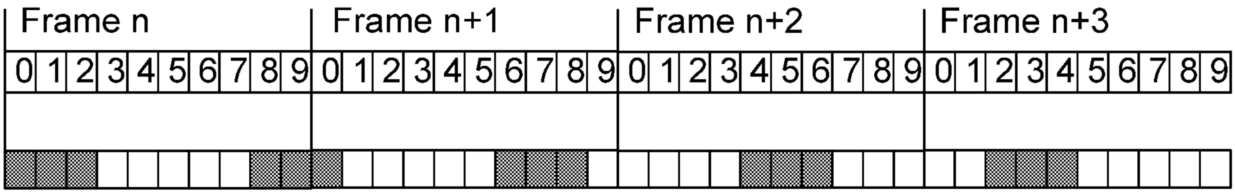


Fig. 12

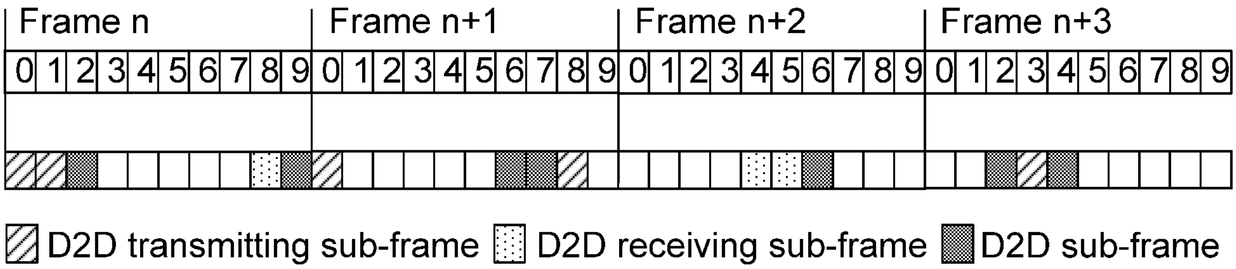


Fig. 13

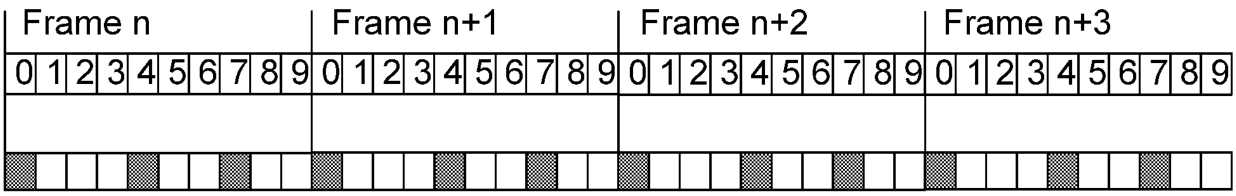


Fig. 14

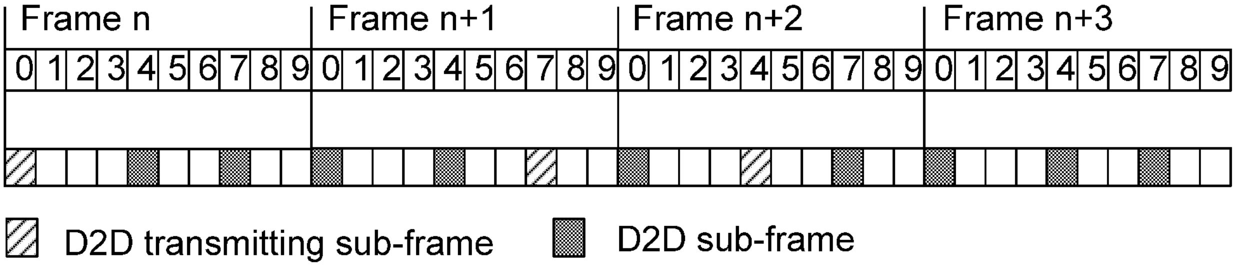

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 102281099 A
- WO 2013075581 A1
- WO 2013062310 A1
- WO 2011051745 A1
- US 20130064138 A1


### Non-patent literature cited in the description


- LTE D2D reference system design and evaluation methodology. **ALCALEL-LUCENT et al.** 3GPP DRAFT, R1-130953_D2D_EVALUTIONMETHODOLOGY_FINAL, 3RD GENERATION PARTNERSHIP PROJECT (3GPP). MOBILE COMPETENCE CENTRE